# EUROPEAN PATENT APPLICATION

(11) **EP 4 789 780 A1**
(43) Date of publication of application: **12.08.2026**
(21) Application number: 24888291.2
(22) Date of filing: 04.07.2024
(51) Int. Cl.: B07C 5/34, B09B 5/00, G06T 7/70

(54) **FOREIGN MATTER SEPARATION SYSTEM, FOREIGN MATTER SEPARATION METHOD, PROGRAM, AND COMPUTER-READABLE RECORDING MEDIUM STORING PROGRAM**

(30) Priority: 09.11.2023 JP 2023191618
(71) Applicant: JFE Steel Corporation, Tokyo 100-0011 (JP)
(72) Inventor: NAGAYA Hiroki, Tokyo 100-0011 (JP); ISHIGAKI Yusuke, Tokyo 100-0011 (JP); NISHINA Yoshiaki, Tokyo 100-0011 (JP)
(74) Representative: Hoffmann Eitle
(86) International application number: PCT/JP2024/024315
(87) International publication number: WO 2025/099989

(57) **Abstract**

Provided are a foreign matter separation system, a foreign matter separation method, a program, and a computer-readable recording medium storing the program, each of which can reduce the amount of scrap to be removed together with foreign matter in a scrap pile. A foreign matter separation system (1) includes: a transport device (20) configured to lift and transport a portion of a scrap pile (SS); a transported-scrap foreign matter detecting unit (30) configured to detect foreign matter (D) in the scrap pile (SS) lifted by the transport device (20); and a control device (40) configured to, when the transported-scrap foreign matter detecting unit (30) detects the foreign matter (D) in the lifted scrap pile (SS), specify a position of the foreign matter in the lifted scrap pile (SS) and control the transport device (20) to drop the scrap (S) and the foreign matter (D) in the lifted scrap pile (SS) to different areas based on the specified position of the foreign matter (D).

## Description

### Technical Field

The present invention relates to a foreign matter separation system, a foreign matter separation method, a program, and a computer-readable recording medium storing the program, each for separating foreign matter contained in a scrap pile from scrap.

### Background Art

In steel works, in order to reduce environmental impacts in the production of steel products, it is desirable to increase the use of iron-based scrap as an iron source. Generally, an iron-based scrap pile consisting of multiple pieces of iron-based scrap contains foreign matter such as materials of different types and sizes from iron-based scrap, unwanted materials, sealed materials, and hazardous materials, which are unwanted when the iron-based scrap is used.

In the related art, as a method for automatically detecting foreign matter contained in an iron-based scrap pile, PTL 1 proposes an iron scrap inspection method, for example.

In the iron scrap inspection method described in PTL 1 in cooperation with an iron-scrap yard facility, an iron scrap pile loaded on a loading deck of a truck parked at a truck stop position is inspected. This inspection method includes: an imaging step of capturing an image of the iron scrap pile loaded on the loading deck of the truck parked at the truck stop position; an inspection step of inspecting the iron scrap pile in imaging data in such a manner that a detection device determines whether or not any unwanted material is captured in imaging data with the use of a learning model as for unwanted materials that are more likely to be contained in the iron scrap pile, and if an unwanted material is captured in the imaging data, an operator is instructed to remove the unwanted material; and a moving step of moving the inspected iron scrap pile captured in the imaging data with the use of a lift magnet or the like to an inspected-iron-scrap storage yard from the loading deck of the truck. These steps are repeated until the whole scrap pile is removed from the loading deck of the truck. Hereby, unwanted materials can be effectively detected from the iron scrap pile loaded on the loading deck of the truck.

In the meantime, as a method for detecting foreign matter mixed in iron-based scrap and removing the detected foreign matter in the related art, PTL 2 proposes a foreign matter detection device and a foreign matter removal device, for example.

The foreign matter detection device described in PTL 2 includes: a target object image acquisition unit configured to acquire a target object image of a target object containing iron-based scrap; and an image determination unit configured to detect foreign matter by identifying iron-based scrap and foreign matter other than the iron-based scrap from the target object based on the target object image. The foreign matter removal device described in PTL 2 includes: the foreign matter detection device; a foreign matter position specifying unit configured to specify the position of the foreign matter in an actual space based on the determination result from a type determination unit; and a foreign matter removal unit configured to remove the foreign matter from the target object based on the position of the foreign matter, specified by the foreign matter position specifying unit. The foreign matter removal unit includes a gripper movable in three-dimensional directions relative to the target object containing the iron-based scrap.

Hereby, the foreign matter can be accurately detected by the foreign matter detection device from iron-based scrap mixed with the foreign matter, and the foreign matter can be removed from the target object by the foreign matter detection device.

### Citation List

### Patent Literatures

PTL 1: JP 2020-176909 A
PTL 2: JP 2021-163078 A

### Summary of Invention

### Technical Problem

However, the iron scrap inspection method described in PTL 1 and the foreign matter detection device and the foreign matter removal device described in PTL 2 in the related art have the following problems.

That is, in the case of the iron scrap inspection method described in PTL 1, the detection device can detect unwanted materials contained in the iron scrap pile, but it is necessary for the operator to remove the unwanted materials by a manual operation or the like.

In the case of the foreign matter detection device and the foreign matter removal device described in PTL 2, foreign matter can be automatically removed. However, it is difficult to lift only foreign matter contained in the iron-based scrap pile depending on the gripper of the foreign matter removal unit, and iron-based scrap that is not targeted for removal might be lifted and removed together with the foreign matter.

In view of this, the present invention is achieved in order to solve these problems in the related art, and an object of the present invention is to provide a foreign matter separation system, a foreign matter separation method, a program, and a computer-readable recording medium storing the program, each of which can reduce the amount of scrap to be removed together with foreign matter in a scrap pile.

### Solution to Problem

In order to achieve the above object, a foreign matter separation system according to one aspect of the present invention is a foreign matter separation system for separating foreign matter contained in a scrap pile from scrap. The foreign matter separation system includes: a transport device configured to lift and transport a portion of the scrap pile; a transported-scrap foreign matter detecting unit configured to detect the foreign matter in the scrap pile lifted by the transport device; and a control device configured to, when the transported-scrap foreign matter detecting unit detects the foreign matter in the lifted scrap pile, separate the foreign matter contained in the scrap pile from the scrap by specifying a position of the foreign matter in the lifted scrap pile and controlling the transport device to drop the scrap and the foreign matter in the lifted scrap pile to different areas based on the specified position of the foreign matter contained in the lifted scrap pile.

A foreign matter separation method according to another aspect of the present invention is a foreign matter separation method for separating foreign matter contained in a scrap pile from scrap. The foreign matter separation method includes: a control device controlling a transport device to lift a portion of the scrap pile; a transported-scrap foreign matter detecting unit detecting the foreign matter in the lifted scrap pile; the control device specifying a position of the foreign matter in the lifted scrap pile when the foreign matter is detected in the lifted scrap pile; and the control device separating the foreign matter contained in the scrap pile from the scrap by controlling the transport device to drop the scrap and the foreign matter in the lifted scrap pile to different areas, based on the specified position of the foreign matter in the lifted scrap pile.

A program according to another aspect of the present invention is a program causing a control device to execute the followings: controlling a transport device to lift a portion of the scrap pile; specifying a position of foreign matter in the lifted scrap pile when the foreign matter in the lifted scrap pile is detected by a transported-scrap foreign matter detecting unit; and separating the foreign matter contained in the scrap pile from scrap by controlling the transport device to drop the scrap and the foreign matter in the lifted scrap pile to different areas, based on the specified position of the foreign matter in the lifted scrap pile.

A computer-readable recording medium storing a program, according to another aspect of the present invention, is a computer-readable recording medium storing a program causing a control device to execute the followings: controlling a transport device to lift a portion of the scrap pile; specifying a position of foreign matter in the lifted scrap pile when the foreign matter in the lifted scrap pile is detected by a transported-scrap foreign matter detecting unit; and separating the foreign matter contained in the scrap pile from scrap by controlling the transport device to drop the scrap and the foreign matter in the lifted scrap pile to different areas, based on the specified position of the foreign matter in the lifted scrap pile.

### Advantageous Effects of Invention

With the foreign matter separation system, the foreign matter separation method, the program, and the computer-readable recording medium storing the program according to the present invention, it is possible to reduce the amount of scrap to be removed together with foreign matter in a scrap pile.

### Brief Description of Drawings

FIG. 1 is an overall configuration diagram of a foreign matter separation system according to a first embodiment of the present invention;
FIG. 2 is a functional block diagram of the foreign matter separation system illustrated in FIG. 1;
FIG. 3 is a flowchart to describe the flow of a process in the foreign matter separation system illustrated in FIG. 1;
FIG. 4 is a view to describe one example of a hardware configuration of a control device;
FIG. 5 is a view illustrating an example of a pre-lift captured image of a scrap pile placed on a semi-trailer, together with a lifting target portion of the scrap pile to be lifted by a lifting magnet, the pre-lift captured image being taken by a pre-lift imaging device;
FIG. 6 is a view illustrating an example in which the lifting magnet as a transport device is controlled such that the lifting magnet separates foreign matter contained in the scrap pile from scrap;
FIG. 7 is a view illustrating an example in which a grapple as the transport device is controlled to separate the foreign matter contained in the scrap pile from the scrap;
FIG. 8 is a view illustrating an example in which a shovel as the transport device is controlled to separate the foreign matter contained in the scrap pile from the scrap;
FIG. 9 is a functional block diagram of a foreign matter separation system according to a second embodiment of the present invention;
FIG. 10 is a flowchart to describe the flow of a process in the foreign matter separation system illustrated in FIG. 9;
FIG. 11 is a view illustrating an example of a pre-lift captured image of a scrap pile placed on a semi-trailer together with a lifting target portion of the scrap pile to be lifted by a lifting magnet, the pre-lift captured image being taken by a pre-lift imaging device at the time of separating foreign matter contained in the scrap pile from scrap with the use of a foreign matter separation system according to a modification; and
FIG. 12 is a view illustrating an example in which foreign matter contained in the scrap pile is separated from scrap by controlling the lifting magnet as the transport device with the use of the foreign matter separation system according to the modification when the scrap cannot be lifted due to the foreign matter being obstructive, with the upper side of FIG. 12 illustrating a state of a loading deck of the semi-trailer viewed from above, and the lower side of FIG. 12 illustrating a state of the loading deck of the semi-trailer viewed from its lateral side.

### Description of Embodiments

The following describes embodiments of the present invention with reference to the drawings. The embodiments described below deal with a device or a method to embody the technical idea of the present invention, and the technical idea of the present invention does not specify the quality, shape, structure, arrangement, and the like of components to those of the embodiments described below.

The drawings are schematic. Accordingly, it should be noted that the relationship, ratio, and the like between thickness and planar dimension are different from actual ones, and the drawings include respective parts different in dimensional relationship or ratio.

### (First Embodiment)

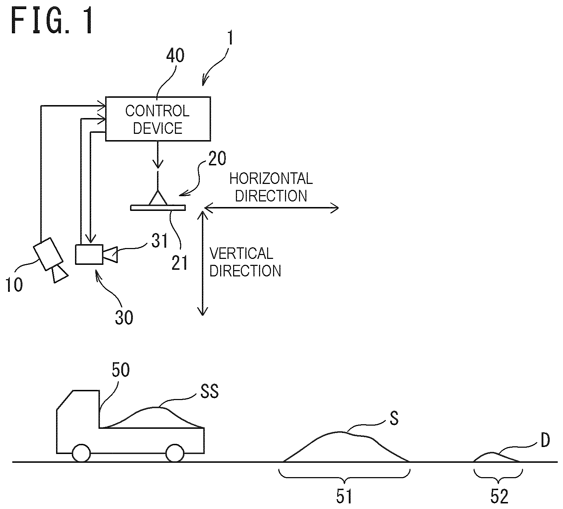

FIG. 1 is an overall configuration diagram of a foreign matter separation system according to a first embodiment of the present invention.

The foreign matter separation system 1 illustrated in FIG. 1 is configured to separate foreign matter D contained in a scrap pile SS from scrap S. In the present embodiment, the scrap pile SS is placed on the loading deck of a semi-trailer 50 and transported to a predetermined position.

The scrap pile SS contains one or more pieces of foreign matter D in addition to a plurality of pieces of scrap (iron-based scrap) S in some cases. Here, the foreign matter D refers to any material that is undesirable when the scrap S is used. The scrap S refers to materials of various types and sizes, unwanted materials, sealed materials, hazardous materials, and similar materials. In the present embodiment, the foreign matter D includes, for example: items containing tramp elements, such as motors; items in which enclosed air may explode, such as sealed materials; items unsuitable for use, such as oversize articles; and non-iron-based, non-metallic materials such as rubber.

The scrap S and the foreign matter D in the scrap pile SS placed on the loading deck of the semi-trailer 50 are separated by the foreign matter separation system 1 and transported to a scrap loading area 51 and a foreign-matter loading area 52, respectively.

The foreign matter separation system 1 includes a pre-lift imaging device 10, a transport device 20, a transported-scrap foreign matter detecting unit 30, and a control device 40.

The pre-lift imaging device 10 is a camera configured to capture an image of the scrap pile SS placed on the loading deck of the semi-trailer 50 from above the loading deck. That is, the pre-lift imaging device 10 captures, in advance, an image of the scrap pile SS before a portion of the scrap pile SS is lifted by a lifting magnet 21 as the transport device 20.

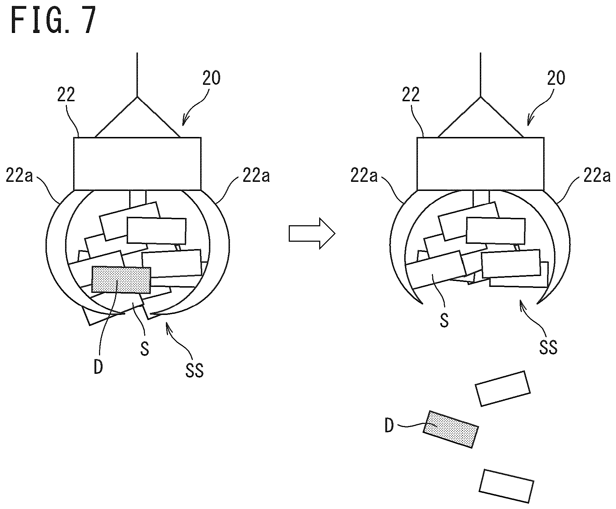

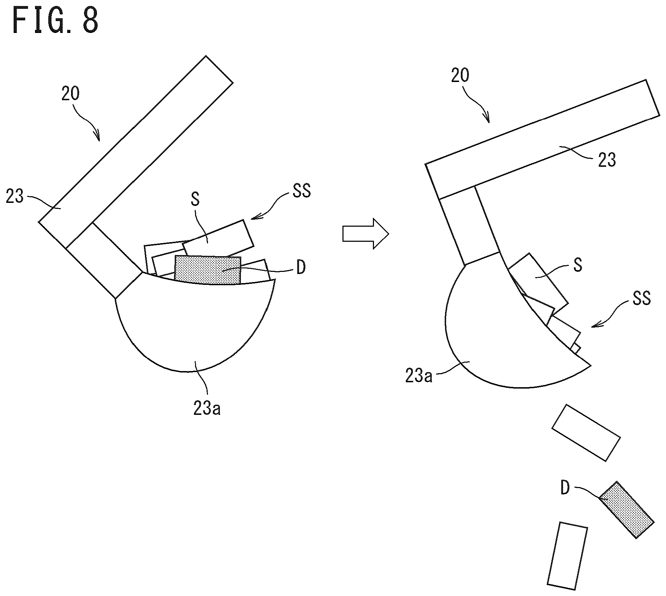

The transport device 20 is configured to lift and transport a portion of the scrap pile SS placed on the loading deck of the semi-trailer 50, and the transport device 20 is the lifting magnet 21 configured to magnetically lift and transport a portion of the scrap pile SS. The transport device 20 is not limited to the lifting magnet 21 and may be a grapple as illustrated in FIG. 7 or may be a shovel 23 as illustrated in FIG. 8, for example. The lifting magnet 21 as the transport device 20 is movable vertically and horizontally, as illustrated in FIG. 1. The lifting magnet 21 moves vertically downward to hold a portion of the scrap pile SS, moves vertically upward to lift the portion of the scrap pile SS, and then moves horizontally to transport the lifted portion of the scrap pile SS.

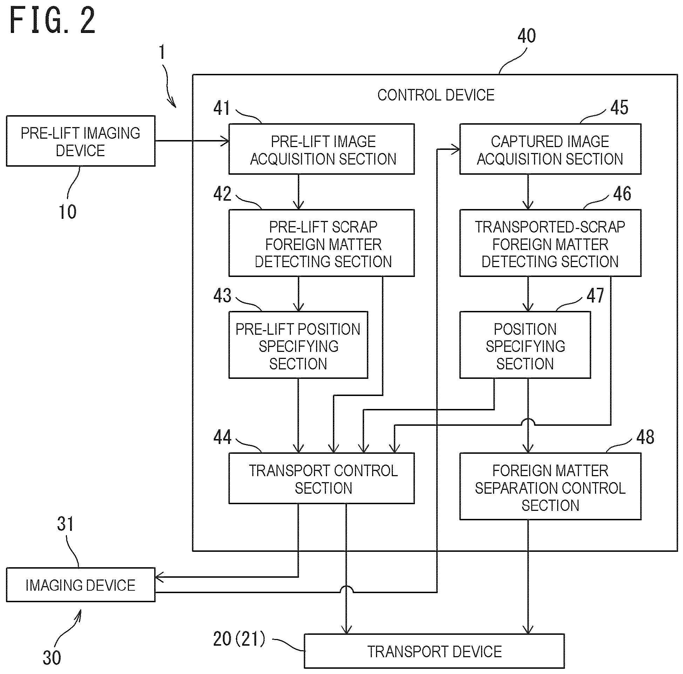

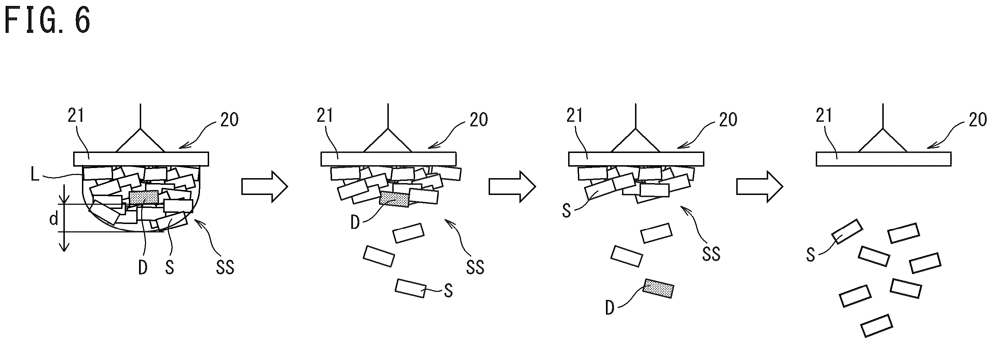

The transported-scrap foreign matter detecting unit 30 is configured to detect foreign matter D in the scrap pile SS lifted by the lifting magnet 21 as the transport device 20 (see FIG. 6). As illustrated in FIGS. 1 and 2, the transported-scrap foreign matter detecting unit 30 includes an imaging device 31 configured to capture an image of the scrap pile SS lifted by the lifting magnet 21, a captured image acquisition section (described later) 45 provided in the control device 40 and configured to acquire the captured image taken by the imaging device 31, and a transported-scrap foreign matter detecting section 46 (described later) provided in the control device 40 and configured to detect the foreign matter D in the lifted scrap pile SS from the captured image acquired by the captured image acquisition section 45.

The imaging device 31 is a camera configured to capture an image of the scrap pile SS lifted by the lifting magnet 21 as the transport device 20. The imaging direction in which the imaging device 31 captures an image of the scrap pile SS may be any direction, and the imaging device 31 captures an image of the lifted scrap pile SS from the lateral side or from below, for example. The imaging device 31 and the pre-lift imaging device 10 are different cameras in the present embodiment, but the same camera may be used.

The captured image acquisition section 45 is an element of the control device 40 and acquires the captured image taken by the imaging device 31.

The transported-scrap foreign matter detecting section 46 is an element of the control device 40 and detects the foreign matter D in the lifted scrap pile SS from the captured image acquired by the captured image acquisition section 45. Any method is usable as a method for detecting the foreign matter D from the captured image by the transported-scrap foreign matter detecting section 46. In the present embodiment, the transported-scrap foreign matter detecting section 46 detects the foreign matter D in the scrap pile SS in such a manner that the captured image acquired by the captured image acquisition section 45 is input into a learning model trained using captured images of the scrap pile SS containing the foreign matter D. That is, the transported-scrap foreign matter detecting section 46 determines whether or not the foreign matter D is present in the scrap pile SS.

The control device 40 has a function to control the lifting magnet 21 as the transport device 20 to lift a portion of the scrap pile SS. The control device 40 also has a function to specify the position of the foreign matter D in the lifted scrap pile SS in a case where the transported-scrap foreign matter detecting unit 30 detects the foreign matter D in the lifted scrap pile SS. The control device 40 also has a function to separate the foreign matter D contained in the scrap pile SS from the scrap S by controlling the lifting magnet 21 as the transport device 20 to drop the scrap S and the foreign matter D in the lifted scrap pile SS to different areas, based on the specified position of the foreign matter D in the lifted scrap pile SS.

First, in order to achieve the function to control the lifting magnet 21 as the transport device 20 to lift a portion of the scrap pile SS, the control device 40 includes a pre-lift image acquisition section 41, a pre-lift scrap foreign matter detecting section 42, a pre-lift position specifying section 43, and a transport control section 44.

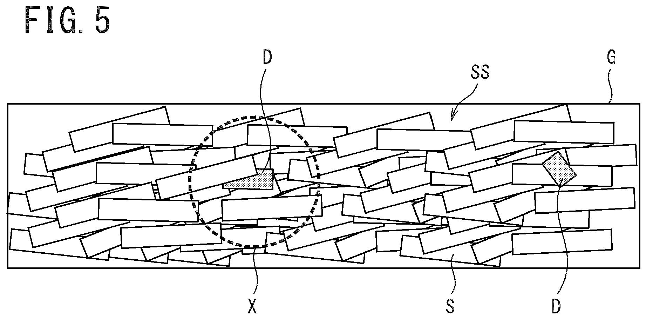

The pre-lift image acquisition section 41 acquires a pre-lift captured image G (see FIG. 5) taken by the pre-lift imaging device 10. FIG. 5 illustrates an example of the pre-lift captured image G acquired by the pre-lift image acquisition section 41 together with a lifting target portion X of the scrap pile SS to be lifted by the lifting magnet 21.

The pre-lift scrap foreign matter detecting section 42 detects the foreign matter D in the scrap pile SS before lifting, from the pre-lift captured image G acquired by the pre-lift image acquisition section 41. Any method is usable as a method for detecting the foreign matter D from the pre-lift captured image G by the pre-lift scrap foreign matter detecting section 42. In the present embodiment, the pre-lift scrap foreign matter detecting section 42 detects the foreign matter D in the scrap pile SS in such a manner that the pre-lift captured image G acquired by the pre-lift image acquisition section 41 is input into a learning model trained using captured images of the scrap pile SS containing the foreign matter D. That is, the pre-lift scrap foreign matter detecting section 42 determines whether or not the foreign matter D is present in the scrap pile SS. In the example of FIG. 5, two pieces of foreign matter D are detected in the scrap pile SS.

The pre-lift position specifying section 43 specifies the position (position coordinate) of the foreign matter D in the scrap pile SS before lifting from the pre-lift captured image G, in a case where the pre-lift scrap foreign matter detecting section 42 detects the foreign matter D in the scrap pile SS before lifting. In the example of FIG. 5, the positions of the two pieces of foreign matter D are specified in the scrap pile SS. At the time of specifying the positions of the pieces of foreign matter D, other information (type, estimated weight, estimated length (dimension), and the like) of the pieces of foreign matter D may be specified.

The transport control section 44 controls the lifting magnet 21 as the transport device 20 to lift a portion of the scrap pile SS which portion contains the foreign matter D, based on the position of the foreign matter D in the scrap pile SS before lifting, the position being specified by the pre-lift position specifying section 43. At this time, the transport control section 44 first moves the lifting magnet 21 horizontally so that the lifting magnet 21 is located above the position of the foreign matter D in the scrap pile SS before lifting, the position being specified by the pre-lift position specifying section 43. Subsequently, the transport control section 44 controls the lifting magnet 21 to move vertically downward to hold the portion of the scrap pile SS which portion contains the foreign matter D, and further controls the lifting magnet 21 to move vertically upward to lift the held portion of the scrap pile SS. In the example illustrated in FIG. 5, the transport control section 44 controls the lifting magnet 21 to lift the portion of the scrap pile SS which portion contains the foreign matter D and corresponds to the lifting target portion X. Note that, in the example illustrated in FIG. 5, the lifting magnet 21 is controlled such that the foreign matter D is located in the center of the lifting target portion X, but the lifting magnet 21 may be controlled such that the foreign matter D is located in an outer peripheral portion of the lifting target portion X. When the foreign matter D is located in the outer peripheral portion of the lifting target portion X, the foreign matter D easily appears in a captured image of the scrap pile SS lifted by the lifting magnet 21 at the time when the captured image is taken by the imaging device 31, so that the foreign matter D can be easily detected from the captured image.

At this time, scrap S other than the foreign matter D is also lifted together by the lifting magnet 21. In a case where the foreign matter D is a nonmagnetic material, the foreign matter D may not be attracted to the magnet of the lifting magnet 21. In that case, the foreign matter D is lifted together with scrap S around the foreign matter D. Note that, in this case, a transport device that does not depend on magnetic force, such as a crane, may be used instead of the lifting magnet 21. The transport control section 44 may control the position and magnetic force of the lifting magnet 21 using information (type, estimated weight, estimated length (dimension), and the like) other than the position of the foreign matter D at the time when the scrap pile SS is lifted by the lifting magnet 21.

In order to achieve the function to specify the position of the foreign matter D in the lifted scrap pile SS and the function to separate the foreign matter D contained in the scrap pile SS from the scrap S, the control device 40 includes a position specifying section 47, a foreign matter separation control section 48, and the above-mentioned transport control section 44.

When the foreign matter D in the lifted scrap pile SS is detected by the transported-scrap foreign matter detecting unit 30 (the imaging device 31, the captured image acquisition section 45, and the transported-scrap foreign matter detecting section 46), the position specifying section 47 specifies the position of the foreign matter D in the lifted scrap pile SS from the captured image acquired by the captured image acquisition section 45. In the present embodiment, a portion of the scrap pile SS is lifted by controlling the lifting magnet 21 by the transport control section 44 described above. When the transported-scrap foreign matter detecting unit 30 detects the foreign matter D in the scrap pile SS lifted by the lifting magnet 21, the position specifying section 47 specifies the position of the foreign matter D in the scrap pile SS thus lifted, from the captured image acquired by the captured image acquisition section 45. At the time of specifying the position of the foreign matter D, information (type, estimated weight, estimated length (dimension), and the like) of the foreign matter D may be specified.

The foreign matter separation control section 48 performs control to adjust holding force for maintaining a lifted state of the scrap pile SS by the transport device 20, based on the position of the foreign matter D in the lifted scrap pile SS, the position being specified by the position specifying section 47.

The transport control section 44 controls horizontal transport of the scrap pile SS lifted by the lifting magnet 21 as the transport device 20, based on the position of the foreign matter D in the lifted scrap pile SS, the position being specified by the position specifying section 47.

The control device 40 causes the foreign matter separation control section 48 to adjust the holding force for maintaining the lifted state of the scrap pile SS by the transport device 20 and causes the transport control section 44 to control the transport of the lifted scrap pile SS, so that the foreign matter D contained in the scrap pile SS is separated from the scrap S.

This foreign matter separation control is described more specifically with reference to FIGS. 1 and 6. When the separation of the foreign matter D is performed, the foreign matter separation control section 48 controls the holding force (magnetic force) of the lifting magnet 21 as the transport device 20 based on the position of the foreign matter D in the scrap pile SS, and the transport control section 44 controls the transport of the scrap pile SS based on the position of the foreign matter D in the scrap pile SS. More specifically, the position of the foreign matter D in the scrap pile SS is determined based on whether or not a distance d between the foreign matter D and a boundary line L of the scrap pile SS from its background in the captured image is equal to or lower than a predetermined value, as illustrated in FIG. 6. When the distance d is equal to or lower than the predetermined value, the transport control section 44 determines that the foreign matter D can be dropped, and controls the lifting magnet 21 as the transport device 20 to move to a position above the foreign-matter loading area 52, while the foreign matter separation control section 48 determines that the foreign matter D can be dropped, and decreases the holding force (magnetic force) of the lifting magnet 21 as the transport device 20 to a holding force (magnetic force) that can drop the foreign matter D. Hereby, the foreign matter D is dropped and loaded on the foreign-matter loading area 52. In the meantime, when the distance d is larger than the predetermined value, the transport control section 44 determines that the scrap S can be dropped, and controls the lifting magnet 21 as the transport device 20 to move to a position above the scrap loading area 51, while the foreign matter separation control section 48 determines that the scrap S can be dropped, and decreases the holding force (magnetic force) of the lifting magnet 21 as the transport device 20 to a holding force (magnetic force) that can drop the scrap S. Hereby, the scrap S is dropped and loaded on the scrap loading area 51. Then, the transported-scrap foreign matter detecting unit 30 captures again an image of the scrap pile SS after the scrap S has been dropped, and the position specifying section 47 specifies the position of the foreign matter D in the lifted scrap pile SS. The step of dropping the scrap S to the scrap loading area 51 is repeated until the distance d becomes equal to or lower than the predetermined value. When the distance d becomes equal to or lower than the predetermined value, the transport control section 44 causes the lifting magnet 21 as the transport device 20 to move to a position above the foreign-matter loading area 52, and the foreign matter separation control section 48 decreases the holding force (magnetic force) of the lifting magnet 21 as the transport device 20 to drop the foreign matter D to the foreign-matter loading area 52, so that the foreign matter D is separated from the scrap S.

In terms of the scrap S remaining in the lifted scrap pile SS after the foreign matter D is dropped to the foreign-matter loading area 52, the transport control section 44 determines that the scrap S in the lifted scrap pile SS can be dropped, and controls the lifting magnet 21 as the transport device 20 to move to a position above the scrap loading area 51, while the foreign matter separation control section 48 determines that the scrap S can be dropped, and decreases the holding force (magnetic force) of the lifting magnet 21 as the transport device 20 to a holding force (magnetic force) that can drop the scrap S. Hereby, the scrap S is dropped and loaded on the scrap loading area 51.

Note that a host computer (not illustrated) is connected to the transport control section 44. The transport control section 44 receives stop position information of the semi-trailer 50, positional information of the scrap loading area 51, and positional information of the foreign-matter loading area 52 from the host computer. The transport control section 44 performs horizontal movement control (transport control) of the lifted scrap pile SS, based on the stop position information of the semi-trailer 50, the positional information of the scrap loading area 51, and the positional information of the foreign-matter loading area 52, received from the host computer.

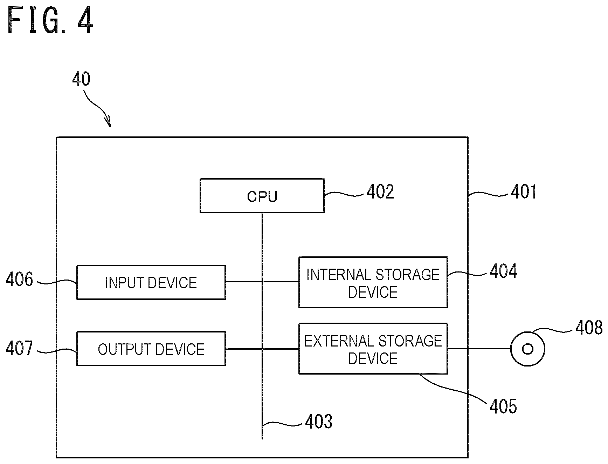

Subsequently, a hardware configuration of the control device 40 will be described with reference to FIG. 4. The control device 40 includes an arithmetic processing unit 401 including a CPU 402. An internal storage device 404 such as a RAM or a ROM, an external storage device 405, an input device 406 such as a keyboard and a mouse, and an output device 407 configured to output commands from the transport control section 44 and the foreign matter separation control section 48 to the lifting magnet 21 as the transport device 20 are connected to the CPU 402 via an internal bus 403.

The external storage device 405 of the control device 40 includes a readable disk drive such as a hard disk drive or a solid state drive, and a drive device for CDs, DVDs, BDs, or the like to read data from a recording medium 408. The recording medium 408 storing a program to cause the control device 40 to execute the following functions is set in the external storage device 405, and a read program is installed in the disk drive. Here, the above-mentioned functions include: a pre-lift image acquisition function (step S2 described below) of the pre-lift image acquisition section 41; a pre-scrap foreign matter detection function (step S3 described below) of the pre-lift scrap foreign matter detecting section 42; a foreign matter position specifying function (step S4 described below) of the pre-lift position specifying section 43; a scrap pile lifting control function (step S5, step S11 described below) of the transport control section 44; a captured image acquisition function (step S7, step S13 described below) of the captured image acquisition section 45; a foreign matter detection function (step S8, step S14 described below) of the transported-scrap foreign matter detecting section 46; a foreign matter position specifying function (step S9 described below) of the position specifying section 47; a foreign matter separation control function (step S10 described below) of the foreign matter separation control section 48 and the transport control section 44 through the control of the transport device 20; and a scrap transport control function (step S15 described below) of the transport control section 44. The installation of the program is not limited to the case where the recording medium 408 is used and may be performed by downloading the program via a network.

In response to an order from the installed program, the CPU 402 of the control device 40 executes: the pre-lift image acquisition function (step S2 described below) of the pre-lift image acquisition section 41; the pre-scrap foreign matter detection function (step S3 described below) of the pre-lift scrap foreign matter detecting section 42; the foreign matter position specifying function (step S4 described below) of the pre-lift position specifying section 43; the scrap pile lifting control function (step S5, step S11 described below) of the transport control section 44; the captured image acquisition function (step S7, step S13 described below) of the captured image acquisition section 45; the foreign matter detection function (step S8, step S14 described below) of the transported-scrap foreign matter detecting section 46; the foreign matter position specifying function (step S9 described below) of the position specifying section 47; the foreign matter separation control function (step S10 described below) of the foreign matter separation control section 48 and the transport control section 44 through the control of the transport device 20; and the scrap transport control function (step S15 described below) of the transport control section 44. Then, the CPU 402 of the control device 40 outputs an instruction from the transport control section 44 and an instruction from the foreign matter separation control section 48 to the lifting magnet 21 as the transport device 20.

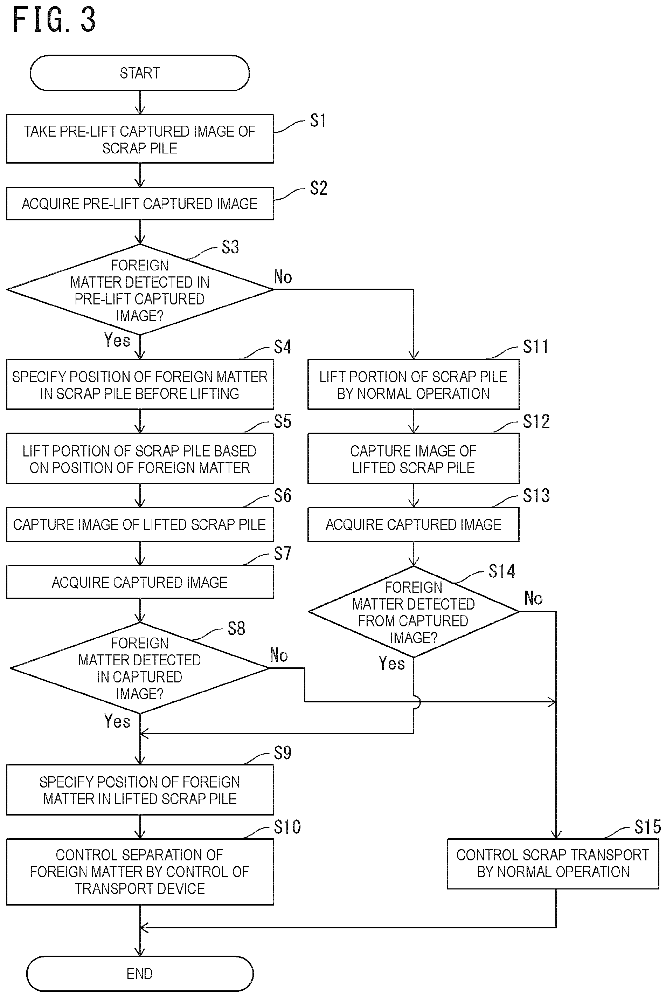

Next will be described the flow of a process in the foreign matter separation system 1 with reference to FIG. 3. FIG. 3 is a flowchart to describe the flow of the process in the foreign matter separation system 1 illustrated in FIG. 1.

First, in step S1, the pre-lift imaging device 10 captures an image of the scrap pile SS placed on the loading deck of the semi-trailer 50 from above the loading deck. That is, the pre-lift imaging device 10 captures, in advance, an image of the scrap pile SS before a portion of the scrap pile SS is lifted by the lifting magnet 21 as the transport device 20 (a pre-imaging step).

Then, in step S2, the pre-lift image acquisition section 41 of the control device 40 acquires a pre-lift captured image G (see FIG. 5) taken by the pre-lift imaging device 10 (a pre-lift captured image acquisition step).

Subsequently, in step S3, the pre-lift scrap foreign matter detecting section 42 of the control device 40 detects the foreign matter D in the scrap pile SS before lifting from the pre-lift captured image G acquired in step S2 (a pre-lift scrap foreign matter detecting step).

In step S3, when the foreign matter D is detected (when the determination result is YES), the process advances to step S4, but when no foreign matter D is detected (when the determination result is NO), the process advances to step S11.

In step S4, since the foreign matter D is detected in the scrap pile SS before lifting, the pre-lift position specifying section 43 of the control device 40 specifies the position (position coordinate) of the foreign matter D in the scrap pile SS before lifting from the pre-lift captured image G acquired in step S2 (a pre-lift position specifying step).

Subsequently, in step S5, the transport control section 44 of the control device 40 controls the lifting magnet 21 as the transport device 20 to lift a portion of the scrap pile SS which portion contains the foreign matter D based on the position of the foreign matter D in the scrap pile SS before lifting, the position being specified in step S4 (a lifting step).

At this time, the transport control section 44 first moves the lifting magnet 21 horizontally so that the lifting magnet 21 is located above the position of the foreign matter D in the scrap pile SS before lifting, the position being specified in step S4. Subsequently, the transport control section 44 controls the lifting magnet 21 to move vertically downward to hold the portion of the scrap pile SS which contains the foreign matter D and then controls the lifting magnet 21 to move vertically upward to lift the held portion of the scrap pile SS.

Then, in step S6, the imaging device 31 of the transported-scrap transported-scrap foreign matter detecting unit 30 captures an image of the scrap pile SS lifted in step S5 (an imaging step).

Subsequently, in step S7, the captured image acquisition section 45 of the transported-scrap foreign matter detecting unit 30 acquires the captured image taken in step S6 (a captured image acquisition step).

Then, in step S8, the transported-scrap foreign matter detecting section 46 of the transported-scrap foreign matter detecting unit 30 detects the foreign matter D in the lifted scrap pile SS from the captured image acquired in step S7 (a transported-scrap foreign matter detecting step).

In step S8, when the foreign matter D is detected (when the determination result is YES), the process advances to step S9, but when no foreign matter D is detected (when the determination result is NO), the process advances to step S15.

Note that the determination result in the detection of the foreign matter D in step S8 (the transported-scrap foreign matter detecting step) is generally YES because the pre-lift scrap foreign matter detecting section 42 has already detected the foreign matter D in the scrap pile SS before lifting from the pre-lift captured image G in step S3.

Here, in a case where no foreign matter D is detected in the scrap pile SS before lifting in step S3 (the determination result is NO), and the process advances to step S11, a normal operation is performed, so that the transport control section 44 of the control device 40 controls the lifting magnet 21 as the transport device 20 to lift a portion of the scrap pile SS (a lifting step). In the lifting step, first, the transport control section 44 horizontally moves the lifting magnet 21 based on the stop position information of the semi-trailer 50, received from the host computer (not illustrated), so that the lifting magnet 21 is located above a given position in the scrap pile SS before lifting on the loading deck of the semi-trailer 50. Subsequently, the transport control section 44 controls the lifting magnet 21 to move vertically downward to hold a portion of the scrap pile SS and further controls the lifting magnet 21 to move vertically upward to lift the held portion of the scrap pile SS.

Then, in step S12, the imaging device 31 of the transported-scrap foreign matter detecting unit 30 captures an image of the scrap pile SS lifted in step S11 (an imaging step).

Subsequently, in step S13, the captured image acquisition section 45 of the transported-scrap foreign matter detecting unit 30 acquires the captured image taken in step S12 (a captured image acquisition step).

Then, in step S14, the transported-scrap foreign matter detecting section 46 of the transported-scrap foreign matter detecting unit 30 detects the foreign matter D in the lifted scrap pile SS from the captured image acquired in step S13 (a transported-scrap foreign matter detecting step).

In step S14, when the foreign matter D is detected (when the determination result is YES), the process advances to step S9, but when no foreign matter D is detected (when the determination result is NO), the process advances to step S15.

In step S9, since the foreign matter D is detected in the lifted scrap pile SS, the position specifying section 47 of the control device 40 specifies the position of the foreign matter D in the lifted scrap pile SS from the captured image acquired in step S7 or step S13 (a position specifying step).

Subsequently, in step S10, the foreign matter separation control section 48 and the transport control section 44 of the control device 40 control the lifting magnet 21 as the transport device 20 to drop the scrap S and the foreign matter D in the lifted scrap pile SS to different areas, based on the position of the foreign matter D in the lifted scrap pile SS, the position being specified in step S9, so that the foreign matter D contained in the scrap pile SS is separated from the scrap S (a separation step). More specifically, the foreign matter separation control section 48 of the control device 40 performs control to adjust holding force (magnetic force) for maintaining a lifted state of the scrap pile SS by the lifting magnet 21 as the transport device 20, based on the position of the foreign matter D in the lifted scrap pile SS, the position being specified in step S9. The transport control section 44 of the control device 40 controls horizontal transport of the scrap pile SS lifted by the lifting magnet 21 as the transport device 20, based on the position of the foreign matter D in the lifted scrap pile SS, the position being specified in step S9.

A specific method of separation of the foreign matter D is as described above. That is, the position of the foreign matter D in the scrap pile SS is determined based on whether or not the distance d between the foreign matter D and the boundary line L of the scrap pile SS from its background in the captured image is equal to or lower than the predetermined value, as illustrated in FIG. 6. When the distance d is equal to or lower than the predetermined value, the transport control section 44 determines that the foreign matter D can be dropped, and controls the lifting magnet 21 as the transport device 20 to move to a position above the foreign-matter loading area 52. Meanwhile, the foreign matter separation control section 48 determines that the foreign matter D can be dropped, and decreases the holding force (magnetic force) of the lifting magnet 21 as the transport device 20 to a holding force (magnetic force) that can drop the foreign matter D. Hereby, the foreign matter D is dropped and loaded on the foreign-matter loading area 52. In the meantime, when the distance d is larger than the predetermined value, the transport control section 44 determines that the scrap S can be dropped, and controls the lifting magnet 21 as the transport device 20 to move to a position above the scrap loading area 51. Meanwhile, the foreign matter separation control section 48 determines that the scrap S can be dropped, and decreases the holding force (magnetic force) of the lifting magnet 21 as the transport device 20 to a holding force (magnetic force) that can drop the scrap S. Hereby, the scrap S is dropped and loaded on the scrap loading area 51. Then, the transported-scrap foreign matter detecting unit 30 captures again an image of the scrap pile SS after the scrap S has been dropped, and the position specifying section 47 specifies the position of the foreign matter D in the lifted scrap pile SS. The step of dropping the scrap S to the scrap loading area 51 is repeated until the distance d becomes equal to or lower than the predetermined value. When the distance d becomes equal to or lower than the predetermined value, the transport control section 44 causes the lifting magnet 21 as the transport device 20 to move to a position above the foreign-matter loading area 52, and the foreign matter separation control section 48 decreases the holding force (magnetic force) of the lifting magnet 21 as the transport device 20 to drop the foreign matter D to the foreign-matter loading area 52, so that the foreign matter D is separated from the scrap S.

In terms of the scrap S remaining in the lifted scrap pile SS after the foreign matter D is dropped to the foreign-matter loading area 52, the transport control section 44 determines that the scrap S can be dropped, and controls the lifting magnet 21 as the transport device 20 to move to a position above the scrap loading area 51, while the foreign matter separation control section 48 determines that the scrap S can be dropped, and decreases the holding force (magnetic force) of the lifting magnet 21 as the transport device 20 to a holding force (magnetic force) that can drop the scrap S. Hereby, the scrap S is dropped and loaded on the scrap loading area 51.

Note that, in step S15, since no foreign matter D is contained in the lifted scrap pile SS, the normal operation is performed, so that the transport control section 44 of the control device 40 controls the lifting magnet 21 as the transport device 20 to move to a position above the scrap loading area 51. Meanwhile, the foreign matter separation control section 48 decreases the holding force (magnetic force) of the lifting magnet 21 as the transport device 20 to a holding force (magnetic force) that can drop the scrap S, so that the scrap pile SS is dropped and loaded on the scrap loading area 51.

Hereby, the process in the foreign matter separation system 1 is ended.

As described above, the foreign matter separation system 1 according to the first embodiment includes: the lifting magnet 21 as the transport device 20 configured to lift and transport a portion of the scrap pile SS; and the transported-scrap foreign matter detecting unit 30 configured to detect the foreign matter D in the scrap pile SS lifted by the lifting magnet 21. The foreign matter separation system 1 also includes the control device 40 configured to, when the foreign matter D in the lifted scrap pile SS is detected by the transported-scrap foreign matter detecting unit 30, separate the foreign matter D contained in the scrap pile SS from the scrap S by specifying the position of the foreign matter D in the lifted scrap pile SS, and controlling the lifting magnet 21 to drop the scrap S and the foreign matter D in the lifted scrap pile SS to different areas based on the specified position of the foreign matter D in the lifted scrap pile SS.

Hereby, only the foreign matter D contained in the scrap pile SS can be automatically removed, thereby making it possible to reduce the amount of scrap S to be removed together with the foreign matter D in the scrap pile SS. That is, in comparison with a case where the foreign matter D in the scrap pile SS is just lifted to remove the foreign matter D, it is possible to reduce the amount of the scrap S to be removed together with the foreign matter D.

In the foreign matter separation system 1 according to the first embodiment, the transported-scrap foreign matter detecting unit 30 includes: the imaging device 31 configured to capture an image of the scrap pile SS lifted by the lifting magnet 21 as the transport device 20; the captured image acquisition section 45 configured to acquire the captured image taken by the imaging device 31; and the transported-scrap foreign matter detecting section 46 configured to detect the foreign matter D in the lifted scrap pile SS from the captured image acquired by the captured image acquisition section 45.

Hereby, the foreign matter D in the scrap pile SS lifted by the lifting magnet 21 can be detected by capturing an image of the lifted scrap pile SS by the imaging device 31.

In the foreign matter separation system 1 according to the first embodiment, the control device 40 includes the position specifying section 47 configured to specify the position of the foreign matter D in the lifted scrap pile SS from the captured image when the transported-scrap foreign matter detecting unit 30 detects the foreign matter D in the lifted scrap pile SS. The control device 40 also includes: the foreign matter separation control section 48 configured to perform control to adjust holding force for maintaining a lifted state of the scrap pile SS by the lifting magnet 21 as the transport device, based on the position of the foreign matter D in the lifted scrap pile SS, the position being specified by the position specifying section 47; and the transport control section 44 configured to control transport of the scrap pile SS lifted by the lifting magnet 21. The holding force for maintaining the lifted state of the scrap pile SS by the lifting magnet 21 is adjusted by the foreign matter separation control section 48, and the transport of the lifted scrap pile SS is controlled by the transport control section 44, so that the foreign matter D contained in the scrap pile SS is separated from the scrap S.

Hereby, based on the position of the foreign matter D in the lifted scrap pile SS, the holding force for maintaining the lifted state of the scrap pile SS by the lifting magnet 21 as the transport device 20 is adjusted by the foreign matter separation control section 48, and the transport of the lifted scrap pile SS is controlled by the transport control section 44, thereby making it possible to automatically and accurately remove only the foreign matter D contained in the scrap pile SS.

The foreign matter separation system 1 according to the first embodiment further includes the pre-lift imaging device 10 configured to capture, in advance, an image of the scrap pile SS before a portion of the scrap pile SS is lifted by the lifting magnet 21 as the transport device 20. The control device 40 includes: the pre-lift image acquisition section 41 configured to acquire the pre-lift captured image G taken by the pre-lift imaging device 10; and the pre-lift scrap foreign matter detecting section 42 configured to detect the foreign matter D in the scrap pile SS before lifting from the pre-lift captured image G acquired by the pre-lift image acquisition section 41. The control device 40 also includes: the pre-lift position specifying section 43 configured to specify the position of the foreign matter D in the scrap pile SS before lifting from the pre-lift captured image G when the pre-lift scrap foreign matter detecting section 42 detects the foreign matter D in the scrap pile SS before lifting; and the transport control section 44 configured to control the lifting magnet 21 as the transport device 20 to lift a portion of the scrap pile SS which portion contains the foreign matter D, based on the position of the foreign matter D in the scrap pile SS before lifting, the position being specified by the pre-lift position specifying section 43.

Hereby, it is possible to detect the foreign matter D in the scrap pile SS before lifting and specify the position of the foreign matter D using the captured image taken by the pre-lift imaging device 10, and it is also possible to lift a portion of the scrap pile SS which portion contains the foreign matter D by the lifting magnet 21 as the transport device 20 based on the position of the foreign matter D.

The foreign matter separation method according to the first embodiment includes: the lifting step (step S5, step S11) of the control device 40 controlling the lifting magnet 21 as the transport device 20 to lift a portion of the scrap pile SS; the transported-scrap foreign matter detecting step (steps S6 to S8, steps S12 to S14) of the transported-scrap foreign matter detecting unit 30 detecting the foreign matter D in the scrap pile SS lifted in the lifting step; and the position specifying step (step S9) of the control device 40 specifying the position of the foreign matter D in the lifted scrap pile SS when the foreign matter D in the lifted scrap pile SS is detected in the transported-scrap foreign matter detecting step. The foreign matter separation method further includes the separation step (step S10) of the control device 40 separating the foreign matter D contained in the scrap pile SS from the scrap S by controlling the lifting magnet 21 as the transport device 20 to drop the scrap S and the foreign matter D in the lifted scrap pile SS to different areas, based on the position of the foreign matter D in the lifted scrap pile SS, the position being specified in the position specifying step.

Hereby, only the foreign matter D contained in the scrap pile SS can be automatically removed, thereby making it possible to reduce the amount of scrap S to be removed together with the foreign matter D in the scrap pile SS. That is, in comparison with a case where the foreign matter D in the scrap pile SS is just lifted and removed, it is possible to reduce the amount of the scrap S to be removed together with the foreign matter D.

A program according to the first embodiment is a program causing the control device 40 to execute: the lifting step (step S5, step S11) of controlling the lifting magnet 21 as the transport device 20 to lift a portion of the scrap pile SS; the position specifying step (step S9) of specifying the position of the foreign matter D in the lifted scrap pile SS when the foreign matter D in the scrap pile SS lifted in the lifting step is detected by the transported-scrap foreign matter detecting unit 30; and the separation step (step S10) of separating the foreign matter D contained in the scrap pile SS from the scrap S by controlling the lifting magnet 21 as the transport device 20 to drop the scrap S and the foreign matter D in the lifted scrap pile SS to different areas, based on the position of the foreign matter D in the lifted scrap pile SS, the position being specified in the position specifying step.

Hereby, in response to an order from the program, the control device 40 executes the lifting step (step S5, step S11), the position specifying step (step S9), and the separation step (step S10). Consequently, only the foreign matter D contained in the scrap pile SS can be automatically removed, thereby making it possible to reduce the amount of scrap S to be removed together with the foreign matter D in the scrap pile SS.

The computer-readable recording medium 408 storing the program according to the first embodiment is the computer-readable recording medium 408 storing a program causing the control device 40 to execute: the lifting step (step S5, step S11) of controlling the lifting magnet 21 as the transport device 20 to lift a portion of the scrap pile SS; the position specifying step (step S9) of specifying the position of the foreign matter D in the scrap pile SS when the foreign matter D in the scrap pile SS lifted in the lifting step is detected by the transported-scrap foreign matter detecting unit 30; and the separation step (step S10) of separating the foreign matter D contained in the scrap pile SS from the scrap S by controlling the lifting magnet 21 as the transport device 20 to drop the scrap S and the foreign matter D in the lifted scrap pile SS to different areas, based on the position of the foreign matter D in the lifted scrap pile SS, the position being specified in the position specifying step.

Hereby, in response to an order from the program stored in the recording medium 408, the control device 40 executes the lifting step (step S5, step S11), the position specifying step (step S9), and the separation step (step S10). Consequently, only the foreign matter D contained in the scrap pile SS can be automatically removed, thereby making it possible to reduce the amount of scrap S to be removed together with the foreign matter D in the scrap pile SS.

### (Second Embodiment)

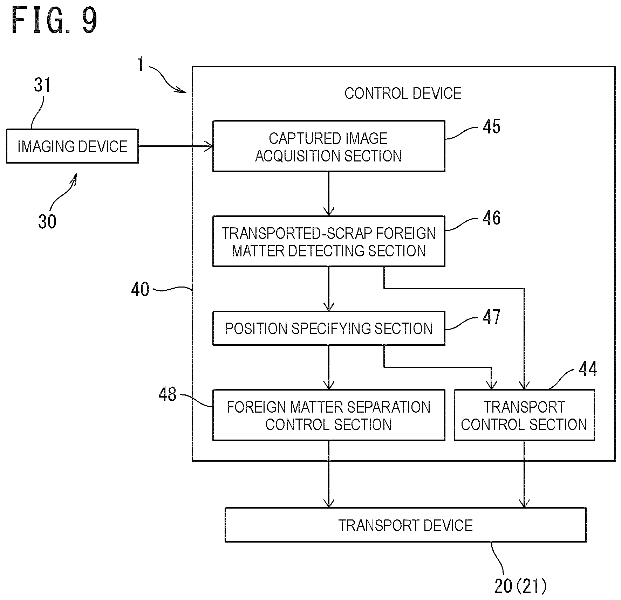

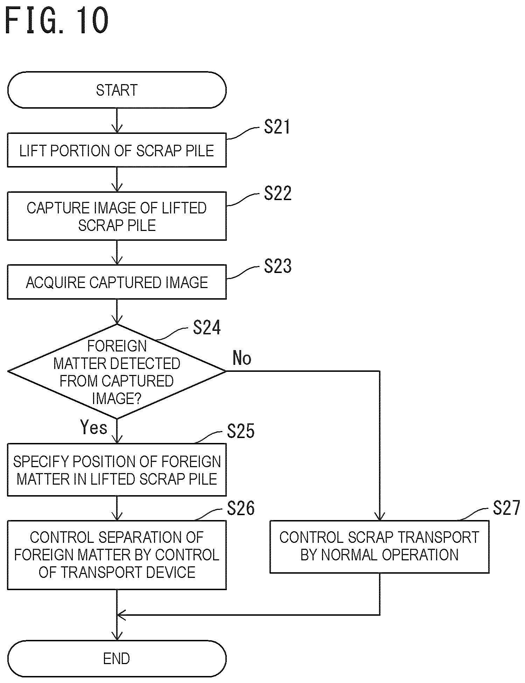

Next will be described a foreign matter separation system, a foreign matter separation method, a program, and a computer-readable recording medium storing the program according to a second embodiment of the present invention, with reference to FIGS. 9 and 10. FIG. 9 is a functional block diagram of the foreign matter separation system according to the second embodiment of the present invention. FIG. 10 is a flowchart to describe the flow of the process in the foreign matter separation system illustrated in FIG. 9.

Similarly to the foreign matter separation system 1 according to the first embodiment, illustrated in FIG. 1, the foreign matter separation system 1 according to the second embodiment of the present invention, illustrated in FIG. 9, is configured to separate the foreign matter D contained in the scrap pile SS from the scrap S.

Unlike the foreign matter separation system 1 according to the first embodiment, illustrated in FIG. 1, the foreign matter separation system 1 according to the second embodiment does not include the pre-lift imaging device 10 but includes the transport device 20, the transported-scrap foreign matter detecting unit 30, and the control device 40.

In the foreign matter separation system 1 according to the first embodiment, the pre-lift imaging device 10 captures an image of the scrap pile SS placed on the loading deck of the semi-trailer 50 (see FIG. 1) before the scrap pile SS is lifted by the lifting magnet 21 as the transport device 20. Then, the pre-lift image acquisition section 41 acquires a pre-lift captured image G (see FIG. 5) taken by the pre-lift imaging device 10, and the pre-lift scrap foreign matter detecting section 42 detects the foreign matter D in the scrap pile SS before lifting, from the pre-lift captured image G acquired by the pre-lift image acquisition section 41. When the pre-lift scrap foreign matter detecting section 42 detects the foreign matter D in the scrap pile SS before lifting, the pre-lift position specifying section 43 specifies the position (position coordinate) of the foreign matter D in the scrap pile SS before lifting from the pre-lift captured image G.

In contrast, in the foreign matter separation system 1 according to the second embodiment, the pre-lift imaging device 10, the pre-lift image acquisition section 41, the pre-lift scrap foreign matter detecting section 42, and the pre-lift position specifying section 43 are not provided, so that an image of the scrap pile SS is not captured in advance before the scrap pile SS is lifted by the lifting magnet 21 as the transport device 20. In the foreign matter separation system 1 according to the second embodiment, the transport control section 44 of the control device 40 controls the lifting magnet 21 as the transport device 20 to move horizontally based on stop position information of the semi-trailer 50, received from the host computer (not illustrated), so that the lifting magnet 21 is located above the loading deck of the semi-trailer 50 that stops. The transport control section 44 then controls the lifting magnet 21 to lift a portion of the scrap pile SS.

Similarly to the transport device 20 of the foreign matter separation system 1 according to the first embodiment, the transport device 20 of the foreign matter separation system 1 according to the second embodiment is configured to lift and transport a portion of the scrap pile SS placed on the loading deck of the semi-trailer 50 (see FIG. 1), and the transport device 20 is the lifting magnet 21 configured to magnetically lift and transport the portion of the scrap pile SS. Similarly to the lifting magnet 21 illustrated in FIG. 1, the lifting magnet 21 as the transport device 20 is movable vertically and horizontally. The lifting magnet 21 moves vertically downward to hold a portion of the scrap pile SS, moves vertically upward to lift the held portion of the scrap pile SS, and then moves horizontally to transport the lifted portion of the scrap pile SS.

Similarly to the transported-scrap foreign matter detecting unit 30 of the foreign matter separation system 1 according to the first embodiment, the transported-scrap foreign matter detecting unit 30 is configured to detect the foreign matter D in the scrap pile SS lifted by the lifting magnet 21 as the transport device 20. The transported-scrap foreign matter detecting unit 30 includes: the imaging device 31 configured to capture an image of the scrap pile SS lifted by the lifting magnet 21; the captured image acquisition section (described later) 45 provided in the control device 40 and configured to acquire the captured image taken by the imaging device 31; and the transported-scrap foreign matter detecting section 46 (described later) provided in the control device 40 and configured to detect the foreign matter D in the lifted scrap pile SS from the captured image acquired by the captured image acquisition section 45.

Similarly to the imaging device 31 of the foreign matter separation system 1 according to the first embodiment, the imaging device 31 is a camera configured to capture an image of the scrap pile SS lifted by the lifting magnet 21 as the transport device 20.

The captured image acquisition section 45 is an element of the control device 40 and acquires the captured image taken by the imaging device 31.

The transported-scrap foreign matter detecting section 46 is an element of the control device 40 and detects the foreign matter D in the lifted scrap pile SS from the captured image acquired by the captured image acquisition section 45. Any method is usable as a method for detecting the foreign matter D from the captured image by the transported-scrap foreign matter detecting section 46. In the second embodiment, the transported-scrap foreign matter detecting section 46 detects the foreign matter D in the scrap pile SS in such a manner that the captured image acquired by the captured image acquisition section 45 is input into a learning model trained using captured images of the scrap pile SS containing the foreign matter D. That is, the transported-scrap foreign matter detecting section 46 determines whether or not the foreign matter D is present in the scrap pile SS.

The control device 40 has a function to control the lifting magnet 21 as the transport device 20 to lift a portion of the scrap pile SS. The control device 40 also has a function to specify the position of the foreign matter D in the lifted scrap pile SS in a case where the transported-scrap foreign matter detecting unit 30 detects the foreign matter D in the lifted scrap pile SS. The control device 40 also has a function to control the lifting magnet 21 as the transport device 20 to drop the scrap S and the foreign matter D in the lifted scrap pile SS to different areas, based on the specified position of the foreign matter D in the lifted scrap pile SS, so that the foreign matter D contained in the scrap pile SS is separated from the scrap S.

First, the control device 40 includes the transport control section 44 to achieve the function to control the lifting magnet 21 as the transport device 20 to lift a portion of the scrap pile SS. As described above, the transport control section 44 controls the lifting magnet 21 as the transport device 20 to lift a portion of the scrap pile SS which portion contains the foreign matter D based on the stop position information of the semi-trailer 50, received from the host computer (not illustrated). At this time, as described above, the transport control section 44 horizontally moves the lifting magnet 21 based on the stop position information of the semi-trailer 50, received from the host computer (not illustrated), so that the lifting magnet 21 is located above the loading deck of the semi-trailer 50. Subsequently, the transport control section 44 controls the lifting magnet 21 to move vertically downward to hold the portion of the scrap pile SS which portion contains the foreign matter D, and then controls the lifting magnet 21 to move vertically upward to lift the held portion of the scrap pile SS.

In order to achieve the function to specify the position of the foreign matter D in the lifted scrap pile SS and the function to separate the foreign matter D contained in the scrap pile SS from the scrap S, the control device 40 includes the position specifying section 47, the foreign matter separation control section 48, and the above-mentioned transport control section 44.

When the foreign matter D in the lifted scrap pile SS is detected by the transported-scrap foreign matter detecting unit 30 (the imaging device 31, the captured image acquisition section 45, and the transported-scrap foreign matter detecting section 46), the position specifying section 47 specifies the position of the foreign matter D in the lifted scrap pile SS from the captured image acquired by the captured image acquisition section 45.

The foreign matter separation control section 48 performs control to adjust holding force for maintaining a lifted state of the scrap pile SS by the transport device 20, based on the position of the foreign matter D in the lifted scrap pile SS, the position being specified by the position specifying section 47.

The transport control section 44 controls horizontal transport of the scrap pile SS lifted by the lifting magnet 21 as the transport device 20, based on the position of the foreign matter D in the lifted scrap pile SS, the position being specified by the position specifying section 47.

The control device 40 causes the foreign matter separation control section 48 to adjust the holding force for maintaining the lifted state of the scrap pile SS by the transport device 20 and causes the transport control section 44 to control the transport of the lifted scrap pile SS, so that the foreign matter D contained in the scrap pile SS is separated from the scrap S.

The following describes the foreign matter separation control more specifically. Similarly to the first embodiment, the position of the foreign matter D in the scrap pile SS is determined based on whether or not the distance d between the foreign matter D and the boundary line L of the scrap pile SS from its background in the captured image is equal to or lower than a predetermined value, as illustrated in FIG. 6. When the distance d is equal to or lower than the predetermined value, the transport control section 44 determines that the foreign matter D can be dropped, and controls the lifting magnet as the transport device 20 to move to a position above the foreign-matter loading area 52, while the foreign matter separation control section 48 determines that the foreign matter D can be dropped, and decreases the holding force (magnetic force) of the lifting magnet as the transport device 20 to a holding force (magnetic force) that can drop the foreign matter D. Hereby, the foreign matter D is dropped and loaded on the foreign-matter loading area 52. In the meantime, when the distance d is larger than the predetermined value, the transport control section 44 determines that the scrap S can be dropped, and controls the lifting magnet as the transport device 20 to move to a position above the scrap loading area 51, while the foreign matter separation control section 48 determines that the scrap S can be dropped, and decreases the holding force (magnetic force) of the lifting magnet as the transport device 20 to a holding force (magnetic force) that can drop the scrap S. Hereby, the scrap S is dropped and loaded on the scrap loading area 51. Then, the transported-scrap foreign matter detecting unit 30 captures again an image of the scrap pile SS after the scrap S has been dropped, and the position specifying section 47 specifies the position of the foreign matter D in the lifted scrap pile SS. The step of dropping the scrap S to the scrap loading area 51 is repeated until the distance d becomes equal to or lower than the predetermined value. When the distance d becomes equal to or lower than the predetermined value, the transport control section 44 causes the lifting magnet 21 as the transport device 20 to move to a position above the foreign-matter loading area 52, and the foreign matter separation control section 48 decreases the holding force (magnetic force) of the lifting magnet 21 as the transport device 20 to drop the foreign matter D to the foreign-matter loading area 52, so that the foreign matter D is separated from the scrap S.

In terms of the scrap S remaining in the lifted scrap pile SS after the foreign matter D is dropped to the foreign-matter loading area 52, the transport control section 44 determines that the scrap S can be dropped, and controls the lifting magnet as the transport device 20 to move to a position above the scrap loading area 51, while the foreign matter separation control section 48 determines that the scrap S can be dropped, and decreases the holding force (magnetic force) of the lifting magnet as the transport device 20 to a holding force (magnetic force) that can drop the scrap S. Hereby, the scrap S is dropped and loaded on the scrap loading area 51.

The hardware configuration of the control device 40 is illustrated in FIG. 4 similarly to the first embodiment. The control device 40 includes the arithmetic processing unit 401 including the CPU 402. The internal storage device 404 such as a RAM or a ROM, the external storage device 405, the input device 406 such as a keyboard and a mouse, and the output device 407 configured to output commands from the transport control section 44 and the foreign matter separation control section 48 to the lifting magnet 21 as the transport device 20 are connected to the CPU 402 via the internal bus 403.

The external storage device 405 of the control device 40 includes a readable disk drive such as a hard disk drive or a solid state drive, and a drive device for CDs, DVDs, BDs, or the like to read data from the recording medium 408. The recording medium 408 storing a program to cause the control device 40 to execute the following functions is set in the external storage device 405, and a read program is installed in the disk drive. Here, the above-mentioned functions include: a scrap pile lifting control function (step S21 described below) of the transport control section 44; a captured image acquisition function (step S23 described below) of the captured image acquisition section 45; a foreign matter detection function (step S24 described below) of the transported-scrap foreign matter detecting section 46; a foreign matter position specifying function (step S25 described below) of the position specifying section 47; a foreign matter separation control function (step S26 described below) of the foreign matter separation control section 48 and the transport control section 44 through the control of the transport device 20; and a scrap transport control function (step S27 described below) of the transport control section 44. The installation of the program is not limited to the case where the recording medium 408 is used and may be performed by downloading the program via a network.

In response to an order from the installed program, the CPU 402 of the control device 40 executes: the scrap pile lifting control function (step S21 described below) of the transport control section 44; the captured image acquisition function (step S23 described below) of the captured image acquisition section 45; the foreign matter detection function (step S24 described below) of the transported-scrap foreign matter detecting section 46; the foreign matter position specifying function (step S25 described below) of the position specifying section 47; the foreign matter separation control function (step S26 described below) of the foreign matter separation control section 48 and the transport control section 44 through the control of the transport device 20; and the scrap transport control function (step S27 described below) of the transport control section 44. Then, the CPU 402 of the control device 40 outputs an instruction from the transport control section 44 and an instruction from the foreign matter separation control section 48 to the lifting magnet 21 as the transport device 20.

Next will be described the flow of a process in the foreign matter separation system 1 according to the second embodiment with reference to FIG. 10. First, in step S21, the transport control section 44 of the control device 40 controls the lifting magnet 21 as the transport device 20 to lift a portion of the scrap pile SS which portion contains the foreign matter D based on the stop position information of the semi-trailer 50, received from the host computer (not illustrated) (a lifting step). At this time, the transport control section 44 horizontally moves the lifting magnet 21 based on the stop position information of the semi-trailer 50, received from the host computer (not illustrated), so that the lifting magnet 21 is located above the loading deck of the semi-trailer 50. Subsequently, the transport control section 44 controls the lifting magnet 21 to move vertically downward to hold a portion of the scrap pile SS which portion contains the foreign matter D and then controls the lifting magnet 21 to move vertically upward to lift the held portion of the scrap pile SS.

Then, in step S22, the imaging device 31 of the transported-scrap foreign matter detecting unit 30 captures an image of the scrap pile SS lifted in step S21 (an imaging step).

Subsequently, in step S23, the captured image acquisition section 45 of the transported-scrap foreign matter detecting unit 30 acquires the captured image taken in step S22 (a captured image acquisition step).

Then, in step S24, the transported-scrap foreign matter detecting section 46 of the transported-scrap foreign matter detecting unit 30 detects the foreign matter D in the lifted scrap pile SS from the captured image acquired in step S23 (a transported-scrap foreign matter detecting step).

In step S24, when the foreign matter D is detected (when the determination result is YES), the process advances to step S25, but when no foreign matter D is detected (when the determination result is NO), the process advances to step S27.

In step S25, since the foreign matter D is detected in the lifted scrap pile SS, the position specifying section 47 of the control device 40 specifies the position of the foreign matter D in the lifted scrap pile SS from the captured image acquired in step S23 (a position specifying step).

Subsequently, in step S26, the foreign matter separation control section 48 and the transport control section 44 of the control device 40 control the lifting magnet 21 as the transport device 20 to drop the scrap S and the foreign matter D in the lifted scrap pile SS to different areas, based on the position of the foreign matter D in the lifted scrap pile SS, the position being specified in step S25, so that the foreign matter D contained in the scrap pile SS is separated from the scrap S (a separation step). More specifically, the foreign matter separation control section 48 of the control device 40 performs control to adjust holding force (magnetic force) for maintaining a lifted state of the scrap pile SS by the lifting magnet 21 as the transport device 20, based on the position of the foreign matter D in the lifted scrap pile SS, the position being specified in step S25. The transport control section 44 of the control device 40 controls horizontal transport of the scrap pile SS lifted by the lifting magnet 21 as the transport device 20, based on the position of the foreign matter D in the lifted scrap pile SS, the position being specified in step S9.

A specific method of separation of the foreign matter D is similar to the first embodiment. That is, the position of the foreign matter D in the scrap pile SS is determined based on whether or not the distance d between the foreign matter D and the boundary line L of the scrap pile SS from its background in the captured image is equal to or lower than the predetermined value (see FIG. 6). When the distance d is equal to or lower than the predetermined value, the transport control section 44 determines that the foreign matter D can be dropped, and controls the lifting magnet 21 as the transport device 20 to move to a position above the foreign-matter loading area 52. Meanwhile, the foreign matter separation control section 48 determines that the foreign matter D can be dropped, and decreases the holding force (magnetic force) of the lifting magnet as the transport device 20 to a holding force (magnetic force) that can drop the foreign matter D. Hereby, the foreign matter D is dropped and loaded on the foreign-matter loading area 52. In the meantime, when the distance d is larger than the predetermined value, the transport control section 44 determines that the scrap S can be dropped, and controls the lifting magnet 21 as the transport device 20 to move to a position above the scrap loading area 51. Meanwhile, the foreign matter separation control section 48 determines that the scrap S can be dropped, and decreases the holding force (magnetic force) of the lifting magnet as the transport device 20 to a holding force (magnetic force) that can drop the scrap S. Hereby, the scrap S is dropped and loaded on the scrap loading area 51. Then, the transported-scrap foreign matter detecting unit 30 captures again an image of the scrap pile SS after the scrap S has been dropped, and the position specifying section 47 specifies the position of the foreign matter D in the lifted scrap pile SS. The step of dropping the scrap S to the scrap loading area 51 is repeated until the distance d becomes equal to or lower than the predetermined value. When the distance d becomes equal to or lower than the predetermined value, the transport control section 44 causes the lifting magnet 21 as the transport device 20 to move to a position above the foreign-matter loading area 52, and the foreign matter separation control section 48 decreases the holding force (magnetic force) of the lifting magnet 21 as the transport device 20 to drop the foreign matter D to the foreign-matter loading area 52, so that the foreign matter D is separated from the scrap S.

In terms of the scrap S remaining in the lifted scrap pile SS after the foreign matter D is dropped to the foreign-matter loading area 52, the transport control section 44 determines that the scrap S can be dropped, and controls the lifting magnet as the transport device 20 to move to a position above the scrap loading area 51, while the foreign matter separation control section 48 determines that the scrap S can be dropped, and decreases the holding force (magnetic force) of the lifting magnet as the transport device 20 to a holding force (magnetic force) that can drop the scrap S. Hereby, the scrap S is dropped and loaded on the scrap loading area 51.

Note that, in step S27, since no foreign matter D is contained in the lifted scrap pile SS, the normal operation is performed, so that the transport control section 44 of the control device 40 controls the lifting magnet 21 as the transport device 20 to move to a position above the scrap loading area 51. Meanwhile, the foreign matter separation control section 48 decreases the holding force (magnetic force) of the lifting magnet 21 as the transport device 20 to a holding force (magnetic force) that can drop the scrap S, so that the scrap pile SS is dropped and loaded on the scrap loading area 51.

Hereby, the process in the foreign matter separation system 1 is ended.

As described above, the foreign matter separation system 1 according to the second embodiment includes: the lifting magnet 21 as the transport device 20 configured to lift and transport a portion of the scrap pile SS; and the transported-scrap foreign matter detecting unit 30 configured to detect the foreign matter D in the scrap pile SS lifted by the lifting magnet 21. The foreign matter separation system 1 also includes the control device 40 configured to, when the foreign matter D in the lifted scrap pile SS is detected by the transported-scrap foreign matter detecting unit 30, separate the foreign matter D contained in the scrap pile SS from the scrap S by specifying the position of the foreign matter D in the lifted scrap pile SS, and controlling the lifting magnet 21 to drop the scrap S and the foreign matter D in the lifted scrap pile SS to different areas based on the specified position of the foreign matter D in the lifted scrap pile SS.

Hereby, only the foreign matter D contained in the scrap pile SS can be automatically removed, thereby making it possible to reduce the amount of scrap S to be removed together with the foreign matter D in the scrap pile SS. That is, in comparison with a case where the foreign matter D in the scrap pile SS is just lifted and removed, it is possible to reduce the amount of the scrap S to be removed together with the foreign matter D.

Unlike the foreign matter separation system 1 according to the first embodiment, the foreign matter separation system 1 according to the second embodiment does not include the pre-lift imaging device 10, the pre-lift image acquisition section 41, the pre-lift scrap foreign matter detecting section 42, and the pre-lift position specifying section 43, and therefore, an image of the scrap pile SS is not captured in advance before the scrap pile SS is lifted by the lifting magnet 21 as the transport device 20. This makes it possible to simplify the facility and a foreign matter separation step.

In the foreign matter separation system 1 according to the second embodiment, the transported-scrap foreign matter detecting unit 30 includes: the imaging device 31 configured to capture an image of the scrap pile SS lifted by the lifting magnet 21 as the transport device 20; the captured image acquisition section 45 configured to acquire the captured image taken by the imaging device 31; and the transported-scrap foreign matter detecting section 46 configured to detect the foreign matter D in the lifted scrap pile SS from the captured image acquired by the captured image acquisition section 45.

Hereby, the foreign matter D in the scrap pile SS lifted by the lifting magnet 21 can be detected by capturing an image of the lifted scrap pile SS by the imaging device 31.

In the foreign matter separation system 1 according to the second embodiment, the control device 40 includes the position specifying section 47 configured to specify the position of foreign matter D in the lifted scrap pile SS from the captured image when the transported-scrap foreign matter detecting unit 30 detects the foreign matter D in the lifted scrap pile SS. The control device 40 further includes: the foreign matter separation control section 48 configured to perform control to adjust holding force for maintaining a lifted state of the scrap pile SS by the lifting magnet 21 as the transport device, based on the position of the foreign matter D in the lifted scrap pile SS, the position being specified by the position specifying section 47; and the transport control section 44 configured to control transport of the scrap pile SS lifted by the lifting magnet 21. The holding force for maintaining the lifted state of the scrap pile SS by the lifting magnet 21 is adjusted by the foreign matter separation control section 48, and the transport of the lifted scrap pile SS is controlled by the transport control section 44, so that the foreign matter D contained in the scrap pile SS is separated from the scrap S.

Hereby, based on the position of the foreign matter D in the lifted scrap pile SS, the holding force for maintaining the lifted state of the scrap pile SS by the lifting magnet 21 as the transport device 20 is adjusted by the foreign matter separation control section 48, and the transport of the lifted scrap pile SS is controlled by the transport control section 44, thereby making it possible to automatically and accurately remove only the foreign matter D contained in the scrap pile SS.

The foreign matter separation method according to the second embodiment includes: the lifting step (step S21) of the control device 40 controlling the lifting magnet 21 as the transport device 20 to lift a portion of the scrap pile SS; the transported-scrap foreign matter detecting step (steps S22 to S24) of the transported-scrap foreign matter detecting unit 30 detecting the foreign matter D in the scrap pile SS lifted in the lifting step; and the position specifying step (step S25) of the control device 40 specifying the position of the foreign matter D in the lifted scrap pile SS when the foreign matter D in the lifted scrap pile SS is detected in the transported-scrap foreign matter detecting step. The foreign matter separation method further includes the separation step (step S26) of the control device 40 separating the foreign matter D contained in the scrap pile SS from the scrap S by controlling the lifting magnet 21 as the transport device 20 to drop the scrap S and the foreign matter D in the lifted scrap pile SS to different areas, based on the position of the foreign matter D in the lifted scrap pile SS, the position being specified in the position specifying step.

Hereby, only the foreign matter D contained in the scrap pile SS can be automatically removed, thereby making it possible to reduce the amount of scrap S to be removed together with the foreign matter D in the scrap pile SS. That is, in comparison with a case where the foreign matter D in the scrap pile SS is just lifted and removed, it is possible to reduce the amount of the scrap S to be removed together with the foreign matter D.

A program according to the second embodiment is a program causing the control device 40 to execute: the lifting step (step S21) of controlling the lifting magnet 21 as the transport device 20 to lift a portion of the scrap pile SS; the position specifying step (step S25) of specifying the position of the foreign matter D in the lifted scrap pile SS when the foreign matter D in the scrap pile SS lifted in the lifting step is detected by the transported-scrap foreign matter detecting unit 30; and the separation step (step S26) of separating the foreign matter D contained in the scrap pile SS from the scrap S by controlling the lifting magnet 21 as the transport device 20 to drop the scrap S and the foreign matter D in the lifted scrap pile SS to different areas, based on the position of the foreign matter D in the lifted scrap pile SS, the position being specified in the position specifying step.

Hereby, in response to an order from the program, the control device 40 executes the lifting step (step S21), the position specifying step (step S25), and the separation step (step S26). Consequently, only the foreign matter D contained in the scrap pile SS can be automatically removed, thereby making it possible to reduce the amount of scrap S to be removed together with the foreign matter D in the scrap pile SS.

The computer-readable recording medium 408 storing the program according to the second embodiment is the computer-readable recording medium 408 storing a program causing the control device 40 to execute: the lifting step (step S21) of controlling the lifting magnet 21 as the transport device 20 to lift a portion of the scrap pile SS; the position specifying step (step S25) of specifying the position of the foreign matter D in the lifted scrap pile SS when the foreign matter D in the scrap pile SS lifted in the lifting step is detected by the transported-scrap foreign matter detecting unit 30; and the separation step (step S26) of separating the foreign matter D contained in the scrap pile SS from the scrap S by controlling the lifting magnet 21 as the transport device 20 to drop the scrap S and the foreign matter D in the lifted scrap pile SS to different areas, based on the position of the foreign matter D in the lifted scrap pile SS, the position being specified in the position specifying step.

Hereby, in response to an order from the program stored in the recording medium 408, the control device 40 executes the lifting step (step S21), the position specifying step (step S25), and the separation step (step S26). Consequently, only the foreign matter D contained in the scrap pile SS can be automatically removed, thereby making it possible to reduce the amount of scrap S to be removed together with the foreign matter D in the scrap pile SS.

The embodiments of the present invention have been described above, but the present invention is not limited to them and can be performed with various alterations and modifications.

For example, the foreign matter separation systems 1 according to the first and second embodiments use the lifting magnet 21 as the transport device 20 but are not limited to the case where the lifting magnet 21 is used. For example, the grapple 22 may be used as the transport device 20 as illustrated in FIG. 7, or the shovel 23 may be used as the transport device as illustrated in FIG. 8. In a case where the grapple 22 is used as the transport device 20, the "holding force of the transport device 20" can be adjusted by widening the opening width between claws 22a of the grapple 22, as illustrated in FIG. 7. In a case where the shovel 23 is used as the transport device, the "holding force of the transport device 20" can be adjusted by changing the inclination of a bucket 23a of the shovel 23, as illustrated in FIG. 8.

In the foreign matter separation system 1 according to the first embodiment, the transport control section 44 of the control device 40 controls the lifting magnet 21 as the transport device 20 to lift a portion of the scrap pile SS which portion contains the foreign matter D based on the position of the foreign matter D in the scrap pile SS before lifting, the position being specified by the pre-lift position specifying section 43. That is, like the example illustrated in FIG. 5, the transport control section 44 controls the lifting magnet 21 to lift a portion of the scrap pile SS which portion contains the foreign matter D and corresponds to the lifting target portion X. Then, the foreign matter D contained in the lifted scrap pile SS is separated from the scrap S by the subsequent operation.

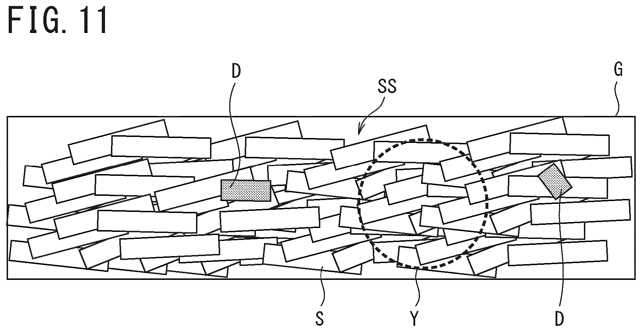

In contrast, in a foreign matter separation system according to a modification (not illustrated), a transport control section of a control device controls a transport device to lift a portion of the scrap pile SS which portion does not contain the foreign matter D, based on the position of the foreign matter D in the scrap pile SS before lifting, the position being specified by a pre-lift position specifying section. The transport control section may control the transport device to transport the lifted portion of the scrap pile SS which portion does not contain the foreign matter D, to its transport destination. FIG. 11 illustrates an example of a pre-lift captured image of the scrap pile SS placed on the semi-trailer 50 (see FIG. 1) together with a lifting target portion Y of the scrap pile SS to be lifted by the transport device, the pre-lift captured image being taken by a pre-lift imaging device at the time of separating the foreign matter D contained in the scrap pile SS from the scrap S with the use of the foreign matter separation system according to the modification. That is, as illustrated in FIG. 11, the transport control section of the foreign matter separation system according to the modification first causes the transport device to move horizontally so that the transport device is located above an area that avoids the position of the foreign matter D in the scrap pile SS before lifting, the position being specified by the pre-lift position specifying section. Subsequently, the transport control section controls the transport device to move vertically downward to hold a portion of the scrap pile SS which portion does not contain the foreign matter D (the scrap pile SS at the lifting target portion Y) and then controls the transport device to move vertically upward to lift the held portion of the scrap pile SS. The transport control section may control the transport device to transport the lifted portion of the scrap pile SS which portion does not contain the foreign matter D, to its transport destination. By repeating these steps, the scrap S can be transported to the transport destination while the foreign matter D is left on the loading deck of the semi-trailer 50.

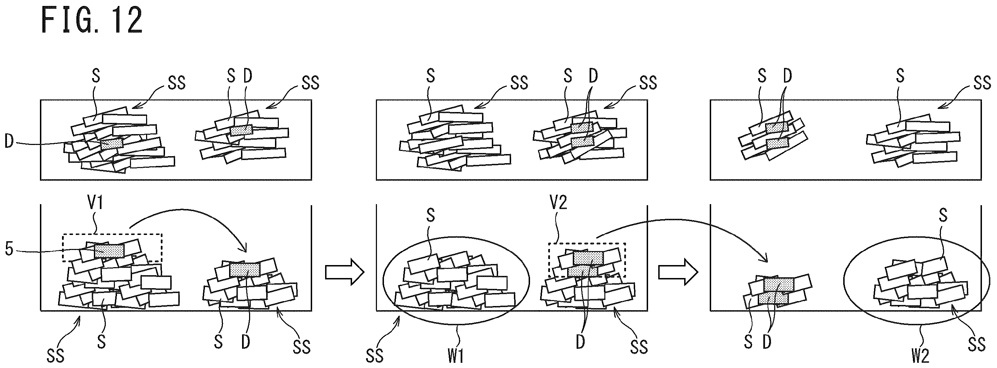

In the foreign matter separation system according to the modification, in a case where the scrap S cannot be lifted due to the foreign matter D being obstructive, the foreign matter D may be moved aside appropriately so that the scrap S can be lifted and transported, as illustrated in FIG. 12. That is, in FIG. 12, in a case where the scrap S cannot be lifted due to the foreign matter D being obstructive, a portion V1 of the scrap pile SS which portion V1 contains the foreign matter D is moved aside, and then, a cluster W1 of remaining scrap S is lifted and transported. In terms of the portion V1 of the scrap pile SS which portion V1 contains the foreign matter D, a portion V2 of the scrap pile SS which portion V2 contains the portion V1 of the scrap pile SS is moved aside, and then, a cluster W2 of remaining scrap S is lifted and transported. This operation may be repeated. FIG. 12 illustrates an example in which, in a case where the scrap S cannot be lifted due to the foreign matter D being obstructive, the transport device is controlled to separate the foreign matter D contained in the scrap pile SS from scrap, using the foreign matter separation system according to the modification. In FIG. 12, similarly to the first embodiment and the second embodiment, at the time when the portion V2 of the scrap pile SS which portion V2 contains the foreign matter D is moved aside, for example, an image of the portion V2 of the lifted scrap pile SS which portion V2 contains the foreign matter D is captured, the position of the foreign matter D is specified from the captured image, and the transport device is controlled such that the scrap S and the foreign matter D in the portion V2 of the scrap pile SS are moved aside to different areas based on the position of the foreign matter D. Hereby, the foreign matter D can be separated from the scrap S.

The foreign matter separation system 1 according to the first and second embodiments is not limited to a case where the position of the foreign matter D in the lifted scrap pile SS is determined based on whether or not the distance d between the foreign matter D and the boundary line L of the scrap pile SS from its background in the captured image is equal to or lower than the predetermined value. For example, the position of the foreign matter D in the lifted scrap pile SS may be determined based on whether the position (the vertical height in the up-down direction) of the foreign matter in the scrap pile SS in the captured image exceeds a given threshold or not.

An area where the scrap pile SS is to be loaded is not limited to the loading deck of the semi-trailer 50 and may be a yard or the like.

### Reference Signs List

1: foreign matter separation system
10: pre-lift imaging device
20: transport device
21: lifting magnet
22: grapple
22a: claw
23: shovel
23a: bucket
30: transported-scrap foreign matter detecting unit
31: imaging device
40: control device
41: pre-lift image acquisition section
42: pre-lift scrap foreign matter detecting section
43: pre-lift position specifying section
44: transport control section
45: captured image acquisition section
46: transported-scrap foreign matter detecting section
47: position specifying section
48: foreign matter separation control section
401: arithmetic processing unit
402: CPU
403: internal bus
404: internal storage device
405: external storage device
406: input device
407: output device
408: recording medium
D: foreign matter
G: pre-lift captured image
S: scrap
SS: scrap pile

## Claims

1. A foreign matter separation system for separating foreign matter contained in a scrap pile from scrap, the system comprising:
a transport device configured to lift and transport a portion of the scrap pile;
a transported-scrap foreign matter detecting unit configured to detect the foreign matter in the scrap pile lifted by the transport device; and
a control device configured to, when the transported-scrap foreign matter detecting unit detects the foreign matter in the lifted scrap pile, separate the foreign matter contained in the scrap pile from the scrap by specifying a position of the foreign matter in the lifted scrap pile and controlling the transport device to drop the scrap and the foreign matter in the lifted scrap pile to different areas based on the specified position of the foreign matter contained in the lifted scrap pile.

2. The foreign matter separation system according to claim 1, wherein
the transported-scrap foreign matter detecting unit includes
an imaging device configured to capture an image of the scrap pile lifted by the transport device,
a captured image acquisition section configured to acquire the captured image taken by the imaging device, and
a transported-scrap foreign matter detecting section configured to detect the foreign matter in the lifted scrap pile from the captured image acquired by the captured image acquisition section.

3. The foreign matter separation system according to claim 2, wherein:
the control device includes
a position specifying section configured to specify the position of the foreign matter in the lifted scrap pile from the captured image when the transported-scrap foreign matter detecting unit detects the foreign matter in the lifted scrap pile,
a foreign matter separation control section configured to perform control to adjust holding force for maintaining a lifted state of the scrap pile by the transport device, based on the position of the foreign matter in the lifted scrap pile, the position being specified by the position specifying section, and
a transport control section configured to control transport of the scrap pile lifted by the transport device;
the foreign matter separation control section adjusts the holding force for maintaining the lifted state of the scrap pile lifted by the transport device; and
the transport control section controls the transport of the lifted scrap pile to separate the foreign matter contained in the scrap pile from the scrap.

4. The foreign matter separation system according to claim 3, further comprising:
a pre-lift imaging device configured to capture an image of the scrap pile in advance before the portion of the scrap pile is lifted by the transport device, wherein:
the control device includes
a pre-lift image acquisition section configured to acquire a pre-lift captured image taken by the pre-lift imaging device,
a pre-lift scrap foreign matter detecting section configured to detect the foreign matter in the scrap pile before lifting from the pre-lift captured image acquired by the pre-lift image acquisition section,
a pre-lift position specifying section configured to specify the position of the foreign matter in the scrap pile before lifting from the pre-lift captured image when the pre-lift scrap foreign matter detecting section detects the foreign matter in the scrap pile before lifting, and
the transport control section configured to control the transport device to lift a portion of the scrap pile which portion contains the foreign matter, based on the position of the foreign matter in the scrap pile before lifting, the position being specified by the pre-lift position specifying section.

5. A foreign matter separation method for separating foreign matter contained in a scrap pile from scrap, the method comprising:
a control device controlling a transport device to lift a portion of the scrap pile;
a transported-scrap foreign matter detecting unit detecting the foreign matter in the lifted scrap pile;
the control device specifying a position of the foreign matter in the lifted scrap pile when the foreign matter is detected in the lifted scrap pile; and
the control device separating the foreign matter contained in the scrap pile from the scrap by controlling the transport device to drop the scrap and the foreign matter in the lifted scrap pile to different areas, based on the specified position of the foreign matter in the lifted scrap pile.

6. A program causing a control device to execute the followings:
controlling a transport device to lift a portion of the scrap pile;
specifying a position of foreign matter in the lifted scrap pile when the foreign matter in the lifted scrap pile is detected by a transported-scrap foreign matter detecting unit; and
separating the foreign matter contained in the scrap pile from scrap by controlling the transport device to drop the scrap and the foreign matter in the lifted scrap pile to different areas, based on the specified position of the foreign matter in the lifted scrap pile.

7. A computer-readable recording medium storing a program causing a control device to execute the followings:
controlling a transport device to lift a portion of the scrap pile;
specifying a position of foreign matter in the lifted scrap pile when the foreign matter in the lifted scrap pile is detected by a transported-scrap foreign matter detecting unit; and
separating the foreign matter contained in the scrap pile from scrap by controlling the transport device to drop the scrap and the foreign matter in the lifted scrap pile to different areas, based on the specified position of the foreign matter in the lifted scrap pile.
